# EUROPÄISCHE PATENTSCHRIFT

(11) **EP 1 685 977 B1**
(45) Veröffentlichungstag und Bekanntmachung des Hinweises auf die Patenterteilung: **17.10.2012**
(21) Anmeldenummer: 05028354.8
(22) Anmeldetag: 23.12.2005
(51) Int. Cl.: C09D 13/00, B43K 19/18, B43K 19/16

(54) **Mine für Schreib-, Zeichen- oder Malgeräte und holzgefasster Blei- oder Farbstift**
Pencil lead for writing, drawing and painting instruments and wood-encased pencil
Mine de crayon pour un instrument à écrire, à dessiner ou à peindre et crayon de papier et crayon de couleur enrobés de bois

(30) Priorität: 26.01.2005 DE 102005004175
(43) Veröffentlichungstag der Anmeldung: 02.08.2006
(73) Patentinhaber: J.S. Staedtler GmbH & Co. KG, 90427 Nürnberg (DE)
(72) Erfinder: Thies, Andreas, 91090 Effeltrich (DE); Lehrer, Christa, 92318 Neumarkt i.d. Opf. (DE); Reiner, Jürgen, 92318 Neumarkt i.d. Opf. (DE); Delapierre, Christine, 91074 Herzogenaurach (DE); Nein, Robert, 90439 Nürnberg (DE); Ochsenkühn, Franz, 92318 Neumarkt i.d. Opf. (DE); Heindl, Max, 92318 Neumarkt i.d. Opf. (DE)

(56) Entgegenhaltungen:
- DE-A1- 1 644 714
- DE-A1- 4 332 582
- US-A- 1 656 971
- US-B1- 6 572 295

## Beschreibung

Die Erfindung betrifft eine Mine für Schreib-, Zeichnen- oder Malgeräte nach dem Oberbegriff des Hauptanspruchs 1 und einen holzgefassten Blei-oder Fuhrtäft mit einer solchen Mine.

Minen zv/um Schreiben, Zeichnen und/oder Malen sind Minen zum Schreiben, Zeichnen und/oder Malen sind prinzipiell bekannt.

Bekannte Schreib- oder Malminen sind in der Regel als Vollkern-Minen oder Kreiden ausgebildet und innerhalb einer Hülle ortsfest oder verschiebbar gehaltert.

Stand der Technik sind einteilige, homogen ausgebildete Minen, welche einen Kompromiss aus gewünschten Schreibeigenschaften, welche unter anderem über die Minenhärte einstellbar sind und der für die Anwendung notwendigen Minenfestigkeit darstellen.

Wird eine Mindestminenfestigkeit unterschritten, so bleibt in der Regel nur die Möglichkeit den Minenquerschnitt zu vergrößern, um auf diese Weise die Belastbarkeit der Mine zu erhöhen

Es ist hierbei als nachteilig anzusehen, dass eine Vergrößerung des Minendurchmessers und dem damit verbrauchten Minenmaterial, zu einer signifikanten Verteuerung der Mine führt. Weiter ist es hierbei als nachteilig anzusehen, dass ein vergrößerter Minendurchmesser negative Auswirkungen auf die Pressgeschwindigkeit, die Trocknungszeit und den Wärmeenergiebedarf hat.

Aus der DE-GM 12 01 339 und der Patentanmeldung DE-H 142 675 sind mehrfarbige Minen bekannt, wobei verschiedenfarbige Minen ineinander gelagert sind. Mit derartigen Minen bzw. Stiften können mehrfarbige Abstriche erzielt werden. Nachteilig bei den beschrieben Minen und damit hergestellten Stiften ist es, dass trotz der Anordnung verschiedenfarbiger Hülsen ineinander keine Erhöhung der Biegebruchfestigkeit gegenüber einer einfarbigen Mine erreicht wird, was dazu führt, dass die Stifte wie bekannt schnell zum Abbrechen neigen.

Weiter sind aus der DE 43 32 582 A1 gebrannte Bleistiftminen sowie das Verfahren zu deren Herstellung bekannt. Bei derartigen Minen wird eine Minenmasse derart verpresst, dass zwischen dem zentralen Bereich und dem äußeren peripheren Bereich eine oder mehrere Schichten in radialer Richtung im Abstand vom äußeren peripheren Bereich angeordnet sind, in denen der Füllstoff in konzentrischer röhrenförmiger Form orientiert ist, wobei der Füllstoff in den übrigen Bereichen der Mine willkürlich oder radial orientiert ist. Nachteilig ist, dass es sich hierbei um ein aufwändiges Herstellverfahren handelt. Ein Beispiel hierfür ist, dass bei diesem Verfahren durch die plättchenförmigen Zusätze sehr hohe Scherenergien im Extruder auftreten, was die Pressleistung enorm herabsetzt. Ein entscheidender Nachteil ist es zudem, dass die Festigkeitssteigerung die auf diese Weise erfolgt, nicht hoch genug ist, um den zur Herstellung betriebenen Aufwand zu rechtfertigen. Das verwendete oder eingesetzte Minenmaterial ist über den gesamten Minenquerschnitt identisch, was einen hohen Verbrauch an hochwertiger Minenmasse, welche an sich nur im Schreibbereich oder Spitzenbereich benötigt würde, zur Folge hat.

**Aufgabe** der Erfindung ist es daher, eine gebrannte oder ungebrannte Mine zum Schreiben, Zeichnen oder Malen zu schaffen, die die genannten Nachteile nicht aufweist und welche insbesondere eine höhere Belastbarkeit gegen äußere Kräfte aufweist, ohne dass dabei die eingesetzte Minenrezeptur des farbabgebenden Materials, des sogenannten Minenkerns verändert wird. Aufgabe ist es die Anfälligkeit der Mine gegen Bruch aufgrund hoher Schreib- als auch durch Spitzkräfte zu reduzieren.

Diese Aufgabe wird mit einer Mine wie in Anspruch 1 definiert gelöst. Vorteilhafte Ausgestaltungen ergeben sich aus den untergeordpeten Ansprüchen. Weiterhin stallt die Erfindung einem holzgefassten Blei-oder Farbstift mit einer erfindungsgemäßen Minabereit.

Unter Minen zum Schreiben-, Zeichnen, oder Malen versteht man einerseits Minen, die fest in Holz oder andere spitzbare Materialien eingebracht werden und andererseits Minen, die verschiebbar in einer biegesteifen Hülle gehaltert sind. Beispiele hierfür sind holzgefasste Blei- und Farbstifte, Feinminen für mechanische Stifte, sogenannte Druckbleistifte und Minen für Fallstifte. Dabei weisen die Minen üblicherweise Außendurchmesser im Bereich von etwa 0,3 mm bis 6 mm auf.

Bei den Blei- oder Farbminen kann es sich sowohl um gebrannte als auch ungebrannte Minen handeln. Weiter kann die Erfindung auch bei Malkreiden auf Wachsbasis Einsatz finden.

Die gestellte Aufgabe wird dadurch gelöst, indem die erfindungsgemäßen Minen derart ausgebildet sind, wie die in Anspruch 1 definierte Mine. Der Minenkern kann eine Zusammensetzung nach dem Stand der Technik aufweisen.

Der Minenmantel, welcher den Minenkern umgibt, wirkt wie ein Stützmantel. Dieser Stützmantel weist, um die Stabilität der Mine gegen Bruch zu erhöhen, eine erhöhte Festigkeit auf. Es besteht die Möglichkeit den Stützmantel, welcher den Minenkern umgibt, farbig zu gestalten, wobei die verwendeten Farben eine Information über beispielsweise Hersteller, Härtegrad, Minentyp oder Strichstärke enthalten kann. Durch eine farbliche Differenzierung des Mihenmantels vom Minenkern, kann ein markenspezifisches und optisch wahrnehmbares Merkmal geschaffen werden, das dem Verbraucher oder Anwender das Vorliegen einer höherwertigen Mine bereits optisch an der angespitzten Mine durch einen ausgebildeten Farbring an der Kegelfläche signalisiert.

Beispielhaft sei angeführt, dass durch die Ummantelung eines Minenkerns, welcher nach dem Stand der Technik mit bekanntem Minenmaterial hergestellt ist, verglichen mit einer Mine nach dem Stand der Technik ohne Ummantelung, bei gleichem Gesamtquerschnitt, sowohl bei Graphit- als auch Farbminen, die Biegebruchfestigkeit der Minen signifikant um 20 bis 60% ansteigt.

Bei einer derart hohen Steigerung der Biegebruchfestigkeit der ummantelten Minen, könnte auch der Gesamtquerschnitt der ummantelten Minen reduziert werden, ohne dabei an Festigkeit gegenüber nicht ummantelten Minen nach dem Stand der Technik einzubüßen. Eine Kosteneinsparung ist die direkte Folge.

Die Herstellkosten können sich durch Verwendung kostengünstiger Mantelrohstoffe deutlich gesenkt werden.

Es hat sich ferner gezeigt, dass durch spezielle Ummantelungen Schwankungen in der Qualität und Fertigungstoleranz des Kernmaterials nivelliert oder ausgeglichen werden können.

Die Zusammensetzung des Materials für die Mantelzone kann in der Regel aus kostengünstigeren Rohstoffen hergestellt werden, als der genau auf die gewünschten Schreibeigenschaften eingestellte Kern der Mine. Beispielsweise könnte Ton anstatt von Graphit eingesetzt werden.

Vorteilhaft bei einer derartigen Gestaltung der Mine ist es, dass trotz der Festigkeitssteigerung durch die den Minenkern umgebenden Mantelmaterial keine Beeinträchtigung der Schreibqualität auftritt, da der Minenkern die gleiche Zusammensetzung aufweisen kann, wie eine bis dato gefertigte Vollmine nach dem Stand der Technik. Ganz im Gegenteil kann der Minenkern bei ummantelten Minen was die Schreibeigenschaften angeht, deutlich mehr optimiert werden, da ein wesentlicher Festigkeitseintrag durch den Mantel erfolgt.

Der Minenquerschnitt kann kreisförmig, oval, drei-, sechs-, rechteckig oder nahezu beliebig gestaltet ausgebildet sein. Die Kreisform ist dabei aber bevorzugt.

Ein oder mehrere Minenmäntel sund erfindungsgemäß konzentrisch um den Minenkern angeordnet.

Eine konzentrische Anordnung stellt sicher, dass die Mine, unabhängig von der Schreibstellung und damit der Druckbelastung in allen Ausrichtungen die gleiche Festigkeits- und Schreibeigenschaften aufweist.

Liegen mehrere Minenmäntel oder Mantelzonen vor, so können die einzelnen Mäntel unterschiedliche Farben und/oder Zusammensetzungen aufweisen.

Erfindungswesentlich ist, dass das Mantelmaterial eine höhere Biegebruchfestigkeit als das Kernmaterial aufweist

Um eine Mantelmine hoher Qualität herzustellen, sollten weiterhin nachfolgende Randbedingungen erfüllt sein. Hierbei sollte der Minenmantel einer erfindungsgemäß gestalteten Mine
- eine gleiche oder ähnliche Plastizität wie der Minenkern aufweisen,
- das Strömungsverhalten des Mantelmaterials annähernd dem des Kernmaterials entsprechen,
- das Schwindverhalten des Mantels dem Kernmaterial angepässt sein, um eine Rissbildung bei dem Trocknungs- und Brennvorgang zu vermeiden,
- die Trennlinie oder Grenzfläche zwischen Mantelzone und Schreibkern vorzugsweise radial und/oder axial irregulär ausgebildet sein, um eine Gefügeverzahnung zu gewährleisten,
- das Mantelvolumen kleiner oder gleich dem Kernvolumen sein.

So weist eine Mantelmine mit einem kreisförmigen Querschnitt, welche mit mindestens einem sich über die gesamte Länge konzentrisch zu deren Längsachse erstreckenden Minenmantel versehen ist, im Vergleich zu einer Vollmine, deren Querschnittsfläche genau gleich groß zur Querschnittsfläche der Mantelmine gewählt wird, eine höhere Biegebrüchspannung auf.

Gleichzeitig kann die Zusammensetzung und/oder die Oberfläche des Minenmantels derart gestaltet sein, dass beim Einleimen der Mine in eine Holzfassung eine bessere Verklebung erreicht wird.

Es hat sich gezeigt, dass es von Vorteil ist, wenn sowohl der Querschnitt des Minenmantels als auch der Querschnitt des Minenkerns rund ausgebildet sind, da sonst an Kanten nicht zu vernachlässigende Kerbkräfte entstehen, die eine Reduzierung der Biegebruchfestigkeit zur Folge haben.

Ein weiterer Vorteil der Erfindung ist, dass der Minenkern ganz auf spezielle Eigenschaften wie Abriebverhalten oder Gleiteigenschaften.verbessert oder eingestellt werden kann, da die Stabilität überwiegend durch das Mantelmaterial aufgebaut wird.

Anhand einiger Abbildungen wird die erfindungsgemäße Mine nachfolgend näher beschrieben.

Hierbei zeigen:
**Figur 1****:** den Schnitt durch eine erfindungsgemäße Mantelmine mit einem Minenmantel;
**Figur 2****:** den Querschnitt der Mine gemäß Figur 1;
**Figur 3****:** eine erfindungsgemäße Mine, welche in Holz eingeleimt ist;
**Figur 4****:** eine erfindungsgemäße Mine mit zwei Minenmänteln;

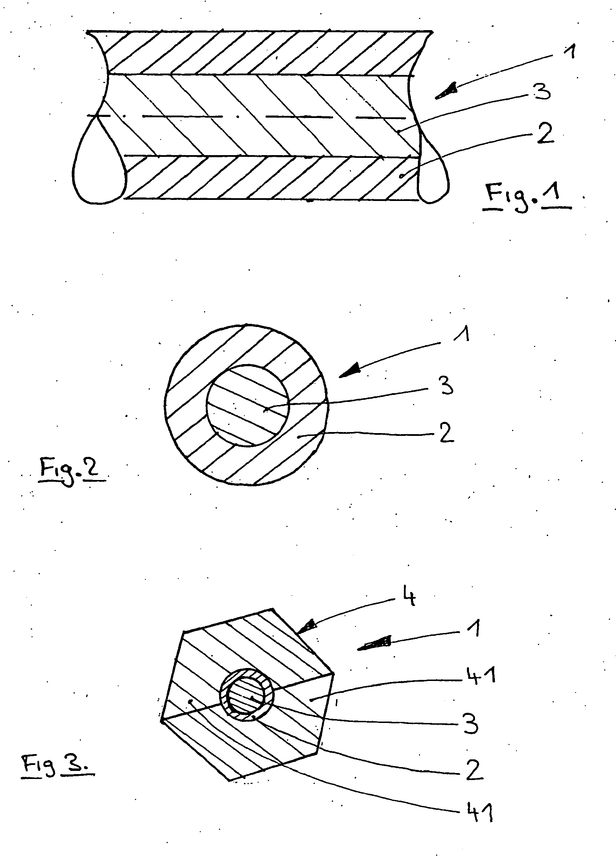

**Figur 1** zeigt eine Mantelmine 1 mit einem Minenmantel 2 im Längsschnitt, wobei sich in dieser Ausführungsform der Minenmantel 2 konzentrisch um die Längsachse des Minenkerns 3 ausgebildet ist.

**Figur 2** zeigt die Mine oder Mantelmine 1 gemäß Figur 1 im Querschnitt.

In dieser Ansicht ist der konzentrische Aufbau der Mine 1 deutlich erkennbar. In dieser Ausführungsform ist der Minenkern 3 von einem Minenmantel 2 umgeben.

**Figur 3** zeigt eine Mantelmine 1, bestehend aus Minenkern 3 und Minenmantel 2, mit einer aus zwei Holzbrettchen 41 bestehenden Umhüllung 4, wobei die Mantelmine 1 in die Nuten der Holzbrettchen 41 eingeleimt ist, wie dies von einem klassischen Blei- oder Buntstift bekannt ist. Der holzgefasste Stift besitzt in dieser Ausführungsform eine sechseckige Außenkontur.

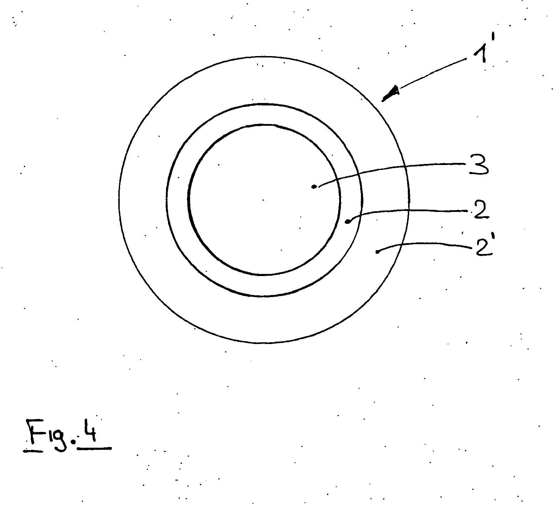

**Figur 4** zeigt eine weitere Ausführungsform einer erfindungsgemäßen Mantelmine 1'. Der Minenkern 3 ist in dieser Ausführung von zwei Minenmänteln 2 und 2' umgeben. Auch der hier gezeigte Aufbau ist ein konzentrisches System.

In den Abbildungen nicht gezeigt sind Ausführungsvarianten von Minen, welche drei oder mehr Minenmäntel aufweisen. Bei den Mänteln kann es sich beispielsweise um chemisch oder keramisch gebundene Mäntel handeln. In welcher Reihenfolge die Minenmäntel hierbei angeordnet sind, ist frei wählbar. Wichtig ist hierbei nur, dass mindestens ein Minenmantel eine höhere Festigkeit als der Minenkern aufweist.

Es kann festgehalten werden, dass durch die erfindungsgemäße Ausgestaltung der Mine eine Erhöhung der Stabilität der Mine gegen Bruch erfolgt. Die Mine ist des weiteren bereits im Herstellungsprozess weniger bruchanfällig, was eine geringere Ausschussrate zur Folge hat.

Für den Verwender eines Schreibgerätes mit der erfindungsgemäßen Mine ist es von Vorteil, dass die Minenspitze mit einer höheren Schreibkraft, im Vergleich zu einer Vollmine mit einheitlich aufgebauter Querschnittsfläche, belastbar ist, dass also höhere Aufdruckkräfte, wie das für das Schreiblernverhalten bei Kindern typisch ist, problemlos vertragen werden.

Um die Erfindung noch deutlicher darzustellen seien nachfolgend beispielhaft Rezepturzusammensetzungen für Minenkern und Minenmantel angegeben.

### Rezepturbeispiel einer Blei-Mantelmine

| **Minenkern: Härte HB** | | |
|---|---|---|
| | Graphit | 65 Gew.% |
| | Ton | 35 Gew.% |

| **Minenmantel: Härte H** | | |
|---|---|---|
| | Graphit | 60 Gew.% |
| | Ton | 40 Gew.% |

In diesem Rezepturbeispiel ist ein weicher Graphitkern der Härte HB mit einem härteren Mantel (Härte H) umgeben. Sowohl Kern als auch Mantel bestehen aus einem farbabgebenden Material.

Aus der nachfolgenden Tabelle kann entnommen werden, wie sich die Festigkeit der Mantelmine gegenüber der Vollmine verändert. Das Flächenverhältnis von Mantel- zu Kernfläche ist gleich 1.

| **Festigkeit** | **Einheit** | **Vollmine** | **Mantelmine** | **Festigkeitssteigerung** |
|---|---|---|---|---|
| Biegebruchfestigkeit der Mine | MPa | 84 | 113 | + 36%% |
| Spitzenbruchfestigkeit des Stiftes | N | 30 | 50 | + 66 % |

Es erfolgt eine Steigerung der Festigkeit durch Zunahme der Biegebruchspannung. Generell erfolgt eine Zunahme der Spitzenbruchfestigkeit, durch eine Zunahme der Biegebruchfestigkeit der Mine und einer verbesserten Verklebung des Mantelmaterials aufgrund dessen optimierten Chemismus.

### Rezepturbeispiel einer Bunt-Mantelmine

| **Minenkern: gelb** | | |
|---|---|---|
| | organisches Pigment | 7 Gew.% |
| | anorganisches Pigment | 15 Gew.% |
| | Gleitmittel | 8 Gew.% |
| | Binder | 5 Gew.% |
| | Füllstoffe | Rest |

| **Minenmantel: weiß** | | |
|---|---|---|
| | anorganisches Pigment | 20 Gew.% |
| | Gleitmittel | 15 Gew.% |
| | Binder | 9 Gew.% |
| | füllstoffe | Rest |

In der nachfolgenden Tabelle sind die Festigkeitsveränderungen im Biege- und Spitzenbruch dokumentiert.

| **Festigkeit** | **Verhältnis Kern/Mantelfläche** | **Vollmine** | **Mantelmine** | **Festigkeitssteigerung** |
|---|---|---|---|---|
| Biegebruchf. der Mine in MPA | 1,44 | 46 | 52 | + 13 % |
| Spitzenbruchf. des Stiftes in N | 1,44 | 17 | 27 | + 59 % |

Auch in diesem Beispiel ist zu erkennen, dass ein weiterer Anstieg der Stabilität durch verbesserte Verklebung der Mine im Holz durch einen optimierte bzw. angepasste Mantelrezeptur erfolgt.

In dieser Ausführungsform einer erfindungsgemäßen Mantelmine, in welcher ein gelber Minenkern von einem weißen Minenmantel umgeben ist, ist im angespitzten Zustand der Mantel als ein weißer Ring erkennbar. Ist eine derartige Mine in Holz gefasst, so ist im Spitzenbereich ein Übergang vom Holz, über einen weißen Ring zum gelben Minenkern erkennbar. Es kann vorteilhaft sein, wenn der Farbe des Rings, sprich dem Mantelmaterial eine Information hinterlegt ist, die dem Benutzer Information beispielsweise über Hersteller, Härtegrad, Minendurchmesser oder dergleichen liefert.

In jedem der beschriebenen Fälle hat sich gezeigt, dass eine Verminderung der Qualität des Abstriches nicht erfolgt.

Die erfindungsgemäße Mantelmine wird durch durch Coextrusion hergestellt.

Die Erfindung betrifft eine Mine für Schreib-, Zeichen- und Malgeräte,wie sie in Anspruch 1 definiert wird. Dabei zweist der mindestens eine Minenmantel eine höhere Biegebruchfestigkeit als der Minenkern auf. Der Minenmantel oder die Minenmäntel sind konzentrisch zum oder um den Minenkern angeordnet. Dabei kann mindestens ein Minenmantel eine andere Farbe aufweisen als der Minenkern. Beispielsweise kann der mindestens eine Minenmantel in weißer Farbe ausgebildet sein.

Der mindestens eine Minenmantel ist farbabgebend ausgebildet.

Die Materialzusammensetzung des Minenkerns und eine Materialzusammensetzung des Minenmantels sind erfindungsgemäß unterschiedlich ausgebildet.

Zudem kann der Minenkern und der mind. eine Minenmantel aus Materialien unterschiedlicher Korngrößenverteilung und/oder Kornfeinheit gebildet sein.

Im Querschnitt der Mine gesehen, kann der Minenmantel eine kleinere oder gleich große Querschnittsfläche aufweisen wie der Minenkern.

Im Querschnitt der Minen gesehen, kann ein Außendurchmesser des Minenkerns mit einem Innendurchmesser des an den Minenkern angrenzenden Minenmantels verzahnt und/oder anderweitig mechanisch verankert sein.

Eine Trennlinie oder eine Grenzfläche ist zwischen dem Minenmantel und dem Minenkern ausgebildet, wobei die Trennlinie vorzugsweise radial und/oder axial irregulär ausgebildet ist.

Der Minenkern kann eine keramische Bindung oder eine organische Bindung aufweisen. Ebenso kann der mindestens eine Minenmantel eine keramische Bindung oder eine organische Bindung aufweisen. Der mindestens eine Minenmantel kann unter Druckspannungen stehen.

Weiterhin betrifft die Erfindung einen holzgefasten Blei- oder Farbstift, welcher eine erfindungsgemäße Mine aufweist.

### Positionen:

- 1, 1': Mantelmine
- 2, 2': Minenmantel
- 3: Minenkern
- 4: Umhüllung
41 Holzbrettchen

## Patentansprüche

1. Mine für Schreib-, Zeichen- und Malgeräte, welche in Richtung der Längsachse einen farbabgebenden Minenkern (3) und mindestens einen farbabgebenden Minenmantel (2, 2') aufweist, wobei der mindestens eine Minenmantel (2, 2') den Minenkern (3) im Querschnitt der Mine (1, 1') gesehen konzentrisch umgibt und wobei Minenmantel (2, 2') und Minenkern (3) coextrudiert sind und somit zueinander verschiebesicher gehaltert sind, wobei eine Materialzusammensetzung des Minenkerns (3) und eine Materialzusammensetzung des Minenmantels (2,2') unterschiedlich ausgebildet sind, wobei der mindestens eine Minenmantel (2, 2') eine höhere Biegebruchfestigkeit als der Minenkern (3) aufweist.

2. Mine nach Anspruch 1
**dadurch gekennzeichnet,**
**dass** mindestens ein Minenmantel (2, 2') eine andere Farbe aufweist als der Minenkern (3).

3. Mine nach einem der vorhergehenden Ansprüche
**dadurch gekennzeichnet,**
**dass** der mindestens eine Minenmantel (2, 2') in weißer Farbe ausgebildet ist.

4. Mine nach einem der vorhergehenden Ansprüche
**dadurch gekennzeichnet,**
**dass** die Mine spitzbar ausgebildet ist.

5. Mine nach einen der vorhergehenden Ansprüche,
**dadurch gekennzeichnet**
**dass** der Minenkern (3) und der mindestens eine Minenmantel (2, 2') aus Materialien unterschiedlicher Korngrößenverteilung und/oder Kornfeinheit gebildet sind.

6. Mine nach einem der vorhergegangenen Ansprüche
**dadurch gekennzeichnet,**
**dass** im Querschnitt der Mine (1, 1') gesehen, der Minenmantel (2, 2') eine kleinere oder gleich große Querschnittsfläche aufweist wie der Minenkern (3).

7. Mine nach einem der vorhergehenden Ansprüche
**dadurch gekennzeichnet,**
**dass** im Querschnitt der Minen (1, 1') gesehen ein Außendurchmesser des Minenkerns (3) mit einem Innendurchmesser des an den Minenkern (3) angrenzenden Minenmantels (2, 2') verzahnt und/oder anderweitig mechanisch verankert sind.

8. Mine nach einem der vorhergehenden Ansprüche,
**dadurch gekennzeichnet,**
**dass** eine Trennlinie oder eine Grenzfläche zwischen dem Minenmantel (2, 2') und dem Minenkern (3) ausgebildet ist und dass die Trennlinie vorzugsweise radial und/oder axial irregulär ausgebildet ist.

9. Mine nach einem der vorhergehenden Ansprüche,
**dadurch gekennzeichnet**
**dass** der mindestens eine Minenmantel (2, 2') unter Druckspannungen steht.

10. Holzgefasster Blei- oder Farbstift, welcher eine coextrudierte Mine (1, 1') nach einem der Ansprüche 1 bis 9 aufweist.

11. **Holzgefasster Blei- oder Farbstift** nach Anspruch 10,
**dadurch gekennzeichnet,**
**dass** die Mine (1, 1') gebrannt ist.

12. **Holzgefasster Blei- oder Farbstift** nach Anspruch 10,
**dadurch gekennzeichnet,**
**dass** die (1, 1') Mine ungebrannt ist.

## Claims

1. Refill for writing, drawing and painting instruments, which in the direction of the longitudinal axis comprises a colour-dispensing refill core (3) and at least one colour-dispensing refill casing (2, 2'), wherein the at least one refill casing (2, 2') concentrically surrounds the refill core (3) as seen in cross-section of the refill (1, 1') and wherein the refill casing (2, 2') and refill core (3) are co-extruded and thus are held to be secure against displacement relative one another, wherein a material composition of the refill core (3) and a material composition of the refill casing (2, 2') are formed to be different and wherein the at least one refill casing (2, 2') has a higher bending strength than the refill core (3).

2. Refill according to claim 1, **characterised in that** the at least one refill casing (2, 2') has a colour different from the refill core (3).

3. Refill according to one of the preceding claims, **characterised in that** the at least one refill casing (2, 2') is formed in white colour.

4. Refill according to any one of the preceding claims, **characterised in that** the refill is formed to able to be pointed.

5. Refill according to any one of the preceding claims, **characterised in that** the refill core (3) and the at least one refill casing (2, 2') are formed from materials of different particle size distribution and/or particle fineness.

6. Refill according to any one of the preceding claims, **characterised in that** the refill casing (2, 2') has a cross-sectional area smaller than or the same size as the refill core (3) as seen in cross-section of the refill (1, 1').

7. Refill according to any one of the preceding claims, **characterised in that** as seen in cross-section of the refill (1, 1') an outer diameter of the refill core (3) is mechanically fixed to an inner diameter of the refill casing (2, 2'), which adjoins the refill core (3), by toothing and/or in another manner.

8. Refill according to any one of the preceding claims, **characterised in that** a parting line or a boundary surface is formed between the refill casing (2, 2') and the refill core (3) and that the parting line is preferably formed to be radially and/or axially irregular.

9. Refill according to any one of the preceding claims, **characterised in that** the at least one refill casing (2, 2') stands under compressive stresses.

10. Wood-mounted pencil or colouring stick which comprises a co-extruded refill (1, 1') according to any one of claims 1 to 9.

11. Wood-mounted pencil or colouring stick according to claim 10, **characterised in that** the refill (1, 1') is calcined.

12. Wood-mounted pencil or colouring stick according to claim 10, **characterised in that** the refill (1, 1') is not calcined.

## Revendications

1. Mine de crayon pour des instruments à écrire, à dessiner ou à peindre, qui présente dans la direction de l'axe longitudinal une âme de mine (3) délivrant de l'encre et au moins une enveloppe de mine (2, 2') délivrant de l'encre, sachant que l'enveloppe de mine au moins unique (2, 2') entoure concentriquement l'âme de mine (3), considéré en coupe transversale de la mine de crayon (1, 1'), et que l'enveloppe de mine (2, 2') et l'âme de mine (3) sont coextrudées et sont ainsi maintenues sans possibilité de translation relative, sachant qu'une composition de matériau de l'âme de mine (3) et une composition de matériau de l'enveloppe de mine (2, 2') sont prévues différentes, sachant que l'enveloppe de mine au moins unique (2, 2') présente une plus grande résistance à la rupture par flexion que l'âme de mine (3).

2. Mine de crayon selon la revendication 1, **caractérisée en ce qu'**au moins une enveloppe de mine (2, 2') présente une couleur différente de celle de l'âme de mine (3).

3. Mine de crayon selon l'une des revendications précédentes, **caractérisée en ce que** l'enveloppe de mine au moins unique (2, 2') est réalisée de couleur blanche.

4. Mine de crayon selon l'une des revendications précédentes, **caractérisée en ce que** la mine de crayon peut être taillée en pointe.

5. Mine de crayon selon l'une des revendications précédentes, **caractérisée en ce que** l'âme de mine (3) et l'enveloppe de mine au moins unique (2, 2') sont constituées de matériaux ayant des répartitions granulométriques et/ou des finesses granulométriques différentes.

6. Mine de crayon selon l'une des revendications précédentes, **caractérisée en ce que**, considéré en coupe transversale de la mine de crayon (1, 1'), l'enveloppe de mine (2, 2') présente une superficie de section inférieure ou égale à celle de l'âme de mine (3).

7. Mine de crayon selon l'une des revendications précédentes, **caractérisée en ce que**, considéré en coupe transversale des mines de crayon (1, 1'), un diamètre extérieur de l'âme de mine (3) est imbriqué par endentement avec un diamètre intérieur de l'enveloppe de mine (2, 2') adjacente à l'âme de mine (3), et/ou lesdits diamètres sont ancrés mécaniquement l'un à l'autre d'une autre manière.

8. Mine de crayon selon l'une des revendications précédentes, **caractérisée en ce qu'**une ligne de séparation ou une surface de séparation est formée entre l'enveloppe de mine (2, 2') et l'âme de mine (3), et **en ce que** la ligne de séparation est de préférence réalisée radialement et/ou axialement irrégulière.

9. Mine de crayon selon l'une des revendications précédentes, **caractérisée en ce que** l'enveloppe de mine au moins unique (2, 2') est soumise à des contraintes de compression.

10. Crayon de papier ou crayon de couleur enrobé de bois, qui présente une mine de crayon coextrudée (1, 1') selon l'une des revendications 1 à 9.

11. Crayon de papier ou crayon de couleur enrobé de bois selon la revendication 10, **caractérisé en ce que** la mine de crayon (1, 1') a subi une cuisson.

12. Crayon de papier ou crayon de couleur enrobé de bois selon la revendication 10, **caractérisé en ce que** la mine de crayon (1, 1') n'a pas subi de cuisson.
